# DEMANDE DE BREVET EUROPEEN

(11) **EP 3 489 196 A1**
(43) Date de publication de la demande: **29.05.2019**
(21) Numéro de dépôt: 18207485.6
(22) Date de dépôt: 21.11.2018
(51) Int. Cl.: C01B 33/02, F27D 3/18

(54) **PROCÉDÉ ET DISPOSITIF POUR ALIMENTER UN BAIN DE SILICIUM LIQUIDE EN PARTICULES DE SILICIUM SOLIDES**

(30) Priorité: 23.11.2017 FR 1761121
(71) Demandeur: Commissariat à l'Energie Atomique et aux Energies Alternatives, 75015 Paris (FR)
(72) Inventeur: BENMANSOUR, Malek, 38054 Grenoble Cedex 09 (FR); ALBARIC, Mickaël, 38054 Grenoble Cedex 09 (FR); HAJJAJI, Hamza, 38054 Grenoble Cedex 09 (FR); BRIZE, Virginie, 38054 Grenoble Cedex 09 (FR); CHABLI, Amal, 38054 Grenoble Cedex 09 (FR)
(74) Mandataire: Nony

(57) **Abrégé**

La présente invention se rapporte à un procédé pour alimenter un bain de silicium liquide en particules de silicium solides, comprenant l'injection desdites particules dans ledit bain par l'extrémité inférieure d'un conduit immergée dans ledit bain et le brassage par rotation desdites particules solides dans un espace confiné dudit bain jusqu'à obtenir leur fusion.

Elle vise en outre un dispositif pour l'alimentation d'un bain de silicium liquide avec des particules de silicium solide convenant au procédé selon l'invention.

## Description

La présente invention concerne un procédé et un dispositif pour alimenter un bain de silicium liquide avec des poudres de silicium notamment fines car générées en tant que sous-produits de fabrication de plaquettes, également connues sous le nom anglo-saxon de « wafers », de silicium.

Le matériau le plus couramment utilisé pour l'élaboration des cellules photovoltaïques est le silicium dans sa forme massive qui représente 80% du marché actuel. Il s'avère que les procédés utilisés soit pour l'élaboration du silicium de qualité électronique soit pour usiner et découper le silicium cristallisé génèrent, comme sous-produits, des poudres de silicium, en quantité non négligeable.

Ainsi, le procédé FBR, « Fluidized Bed Reactor », qui permet d'avoir des particules de silicium de taille centimétrique, génère des particules dont la taille est de l'ordre de plusieurs dizaines de microns. Quant aux procédés d'usinage et de découpe des barreaux de silicium, de même que les étapes de rectification telles que polissage, éboutage, mise sous galette, « wafering », génèrent une perte de matière importante sous forme de fines particules qui est évaluée à plus de 40 % de la matière usinée.

Des méthodes de recyclage de ces poudres sont donc déjà considérées. Il s'agit généralement de procédés relevant de mise en forme (presse, frittage ...), ou de procédés de fusion en vue d'obtenir un matériau massif. Néanmoins, la mise en oeuvre de ces poudres, en tant que telles, à titre de source en silicium, directement dans des bains de silicium en fusion ne peut être considérée d'une manière efficace. En effet, les spécificités morphologiques des particules formant ces poudres complexifient significativement leur manipulation notamment à des fins de remplissage de creusets dans le cas de la fusion / solidification du matériau selon un mode Batch. Plus précisément, elles possèdent une taille granulométrique très faible, de l'ordre de 0,5 à 20 µm, une surface spécifique importante et une densité apparente de l'ordre de 0,5 g.cm⁻³. Or, au regard de ces spécificités, elles ont tendance, lorsqu'elles sont injectées dans un bain de silicium liquide, à rester en surface et avoir une très faible surface de contact avec le métal fondu. Leur mouillabilité avec le métal devient alors faible et une tendance à l'agglomération inter-particules est constatée. Par ailleurs, elles possèdent un fort taux d'oxydation et l'interaction de leur forme oxydée en surface avec le silicium liquide conduit à un dégagement de SiO qui va s'accroître au cours de l'alimentation du bain.

Pour surmonter ces handicaps, plusieurs alternatives de recyclage en bain de silicium fondu ont déjà été proposées. Ainsi, il a été proposé d'injecter les poudres dans un écoulement plasma thermique généré soit par induction soit par arc électrique en vue de les désoxyder et de les fondre partiellement (WO 2015/049 634). Ce procédé bien qu'efficace pour des agglomérats de poudres de tailles de l'ordre de 80µm s'avère malheureusement trop coûteux. Le brevet US 8 685 164 propose de mettre en oeuvre les particules de silicium avec un solvant (Aluminium, Indium ou Etain) par submersion et brassage (creuset tournant). L'ensemble conduit à un alliage liquide Al-Si et un laitier de surface. La séparation des deux phases permet par la suite de poursuivre sur un procédé de purification par extraction solvant. Le brevet US 4787986 propose d'alimenter les poudres en continu en surface d'un bain de silicium liquide et d'évacuer par une tuyère le silicium fondu. Cette solution présente malheureusement un risque d'encapsulation du liquide fondu et également la formation d'un laitier de surface à l'interface liquide/particules solides. Une autre alternative, considérée pour la mise en oeuvre de particules de carbonate de calcium à des fins de décarburation et désulfurisation des alliages ferreux, consiste à injecter les particules considérées à l'aide d'un jet gazeux à haute pression comme gaz vecteur dans le métal fondu. Différentes solutions (US 3 001 864 ; US 4 232 854 ; US 4 244 562 et US 6 409 962) tentent de proposer des méthodes et des dispositifs pour une introduction efficace des particules dans le métal liquide. Il demeure toutefois un problème lié aux projections de métal fondu causées par ces modes d'injection. Enfin, dans le cas de particules de faibles tailles des solutions utilisant des ondes ultrasons ont été proposées pour éviter l'agglomération des particules injectées dans le métal en fusion [X.Liu et al. International Journal of Metalcasting, Vol.8, Issue 3, pp 51-58, 2014]. Toutefois, cette option efficace pour l'injection de faibles quantités de poudres dans les métaux fondus ne s'avère pas envisageable pour le recyclage d'importantes quantités de poudres de silicium.

La présente invention vise précisément à proposer un procédé efficace pour valoriser ces poudres fines de silicium et qui soit dénué des défauts détaillés ci-dessus.

En particulier, la présente invention vise à proposer un procédé efficace pour la mise en oeuvre de ces poudres en tant que source en silicium pour alimenter des bains de silicium liquide.

Plus précisément, le procédé de l'invention repose sur la mise en oeuvre d'un dispositif permettant l'introduction, la dispersion et le contrôle du temps de résidence de particules de silicium, en particulier de taille granulométrique réduite, dans un métal de silicium préalablement fondu.

Ainsi, la présente invention vise à titre principal un procédé pour alimenter un bain de silicium liquide en particules de silicium solides, comprenant l'injection desdites particules dans ledit bain par l'extrémité inférieure d'un conduit, immergée dans ledit bain, et le brassage par rotation desdites particules solides dans un espace confiné dudit bain jusqu'à obtenir leur fusion.

En particulier, l'injection des particules solides dans ledit bain et leur brassage sont réalisés en continu.

Selon un mode de réalisation avantageux, le brassage est réalisé à l'aide d'au moins une pâle de brassage entraînée par rotation et disposée sur l'extrémité inférieure immergée dudit conduit.

Selon un mode de réalisation avantageux, l'espace confiné est délimité par une cloche disposée sur l'extrémité inférieure immergée dudit conduit et au-dessus et autour de ladite pâle de brassage.

Plus particulièrement, le procédé selon l'invention comprend au moins les étapes consistant à :
a) Disposer d'un bain de silicium liquide dans lequel est immergée l'extrémité inférieure d'un conduit, ladite extrémité immergée étant dotée d'au moins une pâle de brassage entraînée par rotation et d'une cloche disposée au-dessus et autour de ladite pâle de brassage,
b) Alimenter l'extrémité supérieure dudit conduit en particules solides de silicium dans des conditions propices à leur circulation dans ledit conduit et leur injection via son extrémité inférieure dans ledit bain liquide et,
c) Brasser par rotation lesdites particules solides dans l'espace de bain liquide ménagé sous la cloche jusqu'à fusion desdites particules solides.

Au sens de l'invention, l'expression « extrémité inférieure » désigne la partie basse du conduit par laquelle les particules solides de silicium sont évacuées dans le bain de silicium liquide.

Au sens de l'invention, l'expression « extrémité supérieure » désigne la partie haute du conduit par laquelle les particules solides de silicium y sont introduites.

Au sens de l'invention, l'expression « espace confiné » désigne un volume réduit du bain à l'intérieur du volume total du bain de silicium liquide.

Selon une variante de réalisation, les étapes b) et c) sont réalisées simultanément.

Selon un mode de réalisation, la circulation des particules dans ledit conduit et leur injection dans ledit bain sont réalisées sous pression à l'aide d'un gaz vecteur inerte.

Selon un autre mode de réalisation, le conduit est alimenté en particules solides via une trémie vibrante.

Comme il ressort de la description détaillée ci-après, le procédé selon l'invention repose sur la mise en oeuvre d'un dispositif d'alimentation pour particules solides agencé pour les disperser rapidement par brassage mécanique dans un bain de silicium liquide et contrôler leur temps de résidence à l'état particulaire dans le bain de silicium en fusion en fonction de leur taux d'oxydation de surface.

Le procédé selon l'invention a ainsi pour avantage significatif de surmonter efficacement les phénomènes indésirables d'agglomération de particules et de formation d'un laitier de surface grâce à la réalisation de l'injection en mode immergé avec un brassage immédiat et en outre réalisé en un espace délimité et confiné dudit bain. Il permet ainsi de promouvoir rapidement la désoxydation et la fusion des particules en mode continu.

Le procédé selon l'invention est tout particulièrement utile pour la mise en oeuvre des poudres fines de silicium qui sont notamment des sous-produits de procédé de fabrication de silicium solide de qualité électronique. Elles peuvent être recyclées avec le procédé selon l'invention en tant que source de silicium pour alimenter des bains de silicium en fusion. En étant compatible avec la mise en oeuvre de poudres de silicium fines, le procédé selon l'invention permet ainsi de s'affranchir de toute étape préliminaire de mise en forme des particules par compression ou frittage.

La présente invention concerne également un dispositif pour alimenter un bain de silicium liquide en une poudre de silicium comportant :
- un conduit d'axe longitudinal X, adapté pour faire circuler une poudre de silicium, dont l'extrémité inférieure est destinée à déboucher dans ledit bain,
- au moins une pâle de brassage, destinée à être immergée dans ledit bain, la pâle étant destinée à être entraînée en rotation par ledit conduit tournant autour de son axe,
- une cloche qui s'étend au-dessus de la pâle de brassage et autour de celle-ci de façon à créer un espace confiné dans ledit bain.

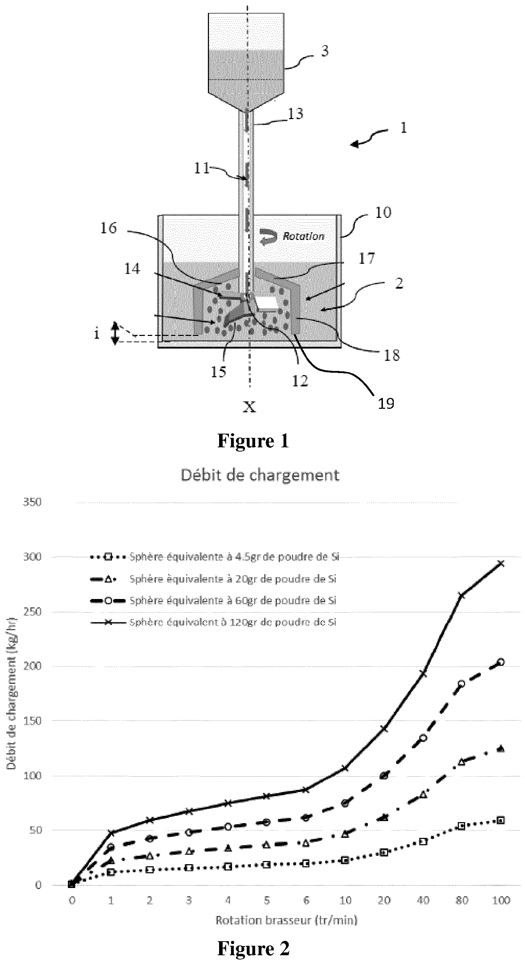

La figure 1 représente un exemple de réalisation d'un système 1 d'alimentation de brassage mécanique convenant à l'invention.

Le système comporte un conduit 11 par lequel circule la poudre de silicium débouchant à son extrémité inférieure 12 dans le bain 2 de silicium liquide, contenu dans le creuset ou cuve 10. Ce conduit peut être défini par un arbre creux 13, tournant autour de son axe longitudinal X, de manière à entraîner un système de brassage 14 dédiée à être immergé dans le bain 2 de silicium liquide. Le diamètre interne de ce conduit 11 peut être compris entre 10 et 50 mm, en particulier d'environ 25 mm.

Le système de brassage 14 est creux en son centre pour assurer l'évacuation de la poudre de l'arbre rotatif 13 au sein du bain de silicium liquide. Le système de brassage comporte avantageusement au moins une pâle de brassage 15 et par exemple une ou plusieurs ailettes qui sont conformées de façon à créer une convection forcée au sein du bain 2 et faciliter la dispersion de la poudre de silicium délivrée par le conduit 11. Le système de brassage peut avantageusement posséder un diamètre compris entre 20 et 200 mm idéalement 50 mm. Le système de brassage 14 peut avantageusement consister en trois pâles 15 équi-angulairement réparties à 120° l'une de l'autre, comme illustré en figure 1.

L'entraînement de l'arbre rotatif 13 peut s'effectuer par tout moyen d'entraînement approprié, non représenté. L'arbre 13 est par exemple solidaire d'une denture qui engrène avec un pignon mis en rotation par un moteur électrique, ou mis en rotation par une courroie entraînée par un moteur électrique.

La connexion entre le système de brassage 14 et l'arbre rotatif 13 peut s'effectuer de diverses façons, le système de brassage comportant par exemple un moyeu qui est engagé sur l'arbre et est immobilisé en rotation sur celui-ci. Dans une variante, le conduit est défini par une canne d'alimentation qui est fixe et l'entraînement du système de brassage s'effectue à l'aide d'un arbre d'entraînement coaxial à la canne et disposé à l'extérieur de celle-ci.

Outre ce système de brassage, le conduit comprend également dans sa partie basse une pièce dite cloche 16 qui s'étend au-dessus du système de brassage 14 et autour de celui-ci de façon à créer un espace confiné pour la poudre injectée dans le bain liquide. Cette cloche 16 permet de confiner en profondeur, dans l'espace ménagé sous la cloche 16, les particules solides au contact du silicium fondu et d'empêcher leur remontée à la surface du bain de silicium fondu. Dans l'exemple illustré, cette cloche présente une paroi supérieure 17 qui est tronconique et diverge vers le fond de la cuve 10 et une paroi latérale 18 qui est cylindrique de révolution autour de l'axe X de rotation de l'arbre 13. Cette cloche est par exemple réalisée en graphite. Le diamètre de cette cloche en sa partie basse est avantageusement au moins trois fois supérieur au diamètre de la pâle de brassage. Dans l'exemple illustré, la cloche 16 tourne avec l'arbre 13. Dans une variante de réalisation, cette cloche est immobile et maintenue fixe par tout moyen de maintien adapté, l'arbre étant rotatif relativement à ces moyens de maintien. Il est ménagé un intervalle i entre le bord inférieur 19 de la cloche 16 et le fond de la cuve 10. Dans un autre mode de réalisation, la cloche est mobile et éventuellement munie de chicanes, et son déplacement permet le mélange des particules, sans avoir besoin d'une pâle de brassage.

Le conduit est alimenté à son extrémité supérieure par une trémie vibrante 3. La connexion entre l'arbre rotatif 13 et la trémie 3 s'effectue par tout moyen adapté pour permettre l'écoulement de la poudre de Si dans le conduit 11, tout en permettant la rotation de l'arbre 13 et la vibration de la trémie 3.

L'écoulement de la poudre de Si est facilité par l'injection d'un gaz vecteur dans le conduit 11. Ce courant de gaz vecteur peut être injecté dans la trémie 3, la connexion entre l'arbre rotatif 13 et la trémie 3 comportant des moyens d'étanchéité évitant une fuite de gaz vecteur à l'interface entre l'arbre rotatif et la trémie.

Le procédé de l'invention peut être illustré par le mode de réalisation comme suit.

Les particules à injecter, sont véhiculées à l'intérieur du conduit d'alimentation jusqu'à son extrémité basse.

Cette alimentation en particules peut avantageusement être réalisée en mode continu.

L'acheminement des particules dans le conduit est avantageusement réalisé par le biais d'un courant de gaz vecteur inerte comme et de préférence l'argon.

Ce gaz vecteur peut être un mélange de gaz inerte et d'hydrogène à l'image notamment de l'argon faiblement hydrogéné, par exemple avec un taux volumique de 1 % à 3 % en hydrogène.

En extrémité basse, ces particules sont soumises de suite à un brassage mécanique par rotation lors de leur évacuation de l'extrémité inférieure du conduit.

La vitesse de brassage par rotation est ajustée pour éviter la formation des agglomérations entre particules et accroître significativement les échanges thermiques entre le métal fondu et la poudre solide afin de prévenir la formation de laitier de surface.

Cette vitesse de brassage par rotation est également ajustée en fonction du débit d'alimentation en poudre et du taux d'oxydation de la poudre injectée. Ainsi, pour une poudre à injecter à haut degré d'oxydation, il est avantageux de privilégier une vitesse accrue pour accélérer l'échange thermique avec le silicium liquide et donc réduire le temps nécessaire à la fusion de ces particules. L'ajustement de cette vitesse de brassage par rotation relève clairement des compétences de l'homme du métier.

Par exemple, pour des particules de silicium solide évacuées en extrémité inférieure du conduit, à une température d'environ 100°C, dans le bain de silicium liquide de température environ 1500 °C, il est avantageux d'ajuster un débit d'injection compris entre 30 et 250 kg/h pour une vitesse de brassage par rotation comprise entre 20 et 80 tr/min à l'aide d'un système de brassage possédant un diamètre d'agitation de 5 cm. La figure 2 ci-après renseigne des valeurs de débit d'injection en fonction de la vitesse de brassage par rotation pour un diamètre d'agitation de 5cm.

Préférentiellement, le débit d'injection est de l'ordre de 150 kg/h pour une vitesse de brassage par rotation de 50 tr/min.

La dispersion des particules de silicium solides dans le silicium liquide est opérée de manière localisée à l'intérieur du volume réduit de bain, ménagé par la cloche. Ce brassage localisé est tout particulièrement avantageux dans la mesure où il permet de garder les particules injectées en contact intime avec le métal fondu mais également de prévenir efficacement une migration des particules solides en surface du bain liquide. Ce dernier aspect est tout particulièrement déterminant lorsque les particules sont de faible densité.

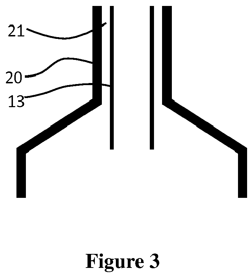

L'évacuation des particules fondues et le cas échéant d'une éventuelle surpression gazeuse est réalisée dans l'ouverture ménagée entre le fond du creuset et l'extrémité basse de la cloche. Ainsi, selon le procédé de l'invention, le monoxyde de silicium (SiO) généré lors la désoxydation de la silice de surface au contact du silicium liquide, est évacué en même temps que les bulles de gaz via cet espace ouvert. Cet espace ouvert peut par exemple consister en un intervalle entre le fond du creuset et l'extrémité inférieure de la cloche compris entre 10 mm et 30 mm. Dans un mode de réalisation particulier illustré à la figure 3, la cloche 16 est munie d'une cheminée 20, par exemple disposée le long de l'arbre creux 13. Cette cheminée 20 ménage avec l'arbre 13 un jeu 21 qui peut être utilisé pour acheminer les gaz, et en particulier le monoxyde de silicium, jusqu'en dehors du bain de silicium liquide.

Selon un mode de réalisation particulier, les particules solides de silicium de départ peuvent être introduites dans le conduit, par son extrémité supérieure, à l'aide d'une trémie vibrante à partir d'un conteneur d'alimentation à poudres.

Selon un autre mode de réalisation particulier, les particules de silicium solides de départ peuvent préalablement être préchauffées, notamment à une température pouvant varier de 500 à 1000 °C dans le conteneur d'alimentation. Cette opération de préchauffage est intéressante pour éliminer les résidus d'humidité ou des traces d'hydrocarbures. Elle est également avantageuse pour éviter l'apparition de points froids au cours de l'insertion dans le bain de silicium en fusion.

Comme précisé précédemment, un procédé selon l'invention est particulièrement intéressant pour réaliser efficacement la dispersion de particules fines solide dans un bain de silicium liquide.

Ainsi, selon un mode de réalisation avantageux, le procédé met en oeuvre des particules solides de silicium de taille submicronique et de préférence variant de 0,2 à 50 µm et de préférence de 0,5 à 20 µm.

Selon un autre mode de réalisation particulier, les particules sont des particules de silicium solides possédant un taux d'oxygène entre 5% en poids à 30% en poids par rapport à leur poids total.

Les exemples et figures soumis ci-après sont présentés à des fins d'illustration et non limitatives du domaine de l'invention.
La figure 1 représente un exemple de réalisation d'un système d'alimentation de brassage mécanique convenant à l'invention.
La figure 2 renseigne des valeurs de débit d'injection en fonction de la vitesse de brassage par rotation pour un diamètre d'agitation de 5cm.
La figure 3 représente un détail d'un mode de réalisation particulier de l'invention.

### EXEMPLE 1

La poudre considérée est une poudre de silicium générée dans les conditions standards d'une découpe industrielle.

Ses particules présentent un taux d'oxygène de 5% en poids et une teneur en impuretés de plusieurs centaines de ppmw.

Leur analyse granulométrique montre que la majorité des particules ont un diamètre compris entre 0,5 et 20 µm. Des agglomérats de plusieurs centaines de µm sont également observés.

Un bain de silicium liquide a été obtenu par chauffage de silicium à 1500°C dans un creuset en graphite de 400 mm de diamètre.

Le dispositif utilisé pour alimenter ce bain avec la poudre de silicium est conforme à celui illustré en figure 1.

Son conduit, en graphite, possède un diamètre de 15 mm.

L'extrémité basse de ce conduit est munie d'un système de brassage constitué de 3 pâles et d'un diamètre de 50 mm en graphite et troué au centre pour permettre l'injection des particules dans le bain de silicium liquide. La rotation mécanique des pâles de brassage est commandée électriquement.

La cloche de ce conduit, qui est disposée au-dessus et autour des pâles de brassage possède un diamètre d'environ 150 mm en sa partie basse pour une hauteur de 100 mm. Elle permet de ménager un volume confiné de 7 L de bain de silicium liquide.

L'extrémité inférieure du conduit est immergée avec son système de brassage et sa cloche dans le bain liquide en ménageant une ouverture entre le fond du creuset et la partie basse de la cloche pour permettre l'évacuation des particules fondues et de la surpression gazeuse. L'espace ouvert est représenté par un écart de 2 à 4 cm.

L'injection des particules dans le bain de silicium liquide via ce conduit est réalisée comme suit :
Les poudres de silicium subissent préalablement un préchauffage à la température de 500 C° à l'aide d'un chauffage dans le conteneur d'alimentation. Elles sont ensuite dirigées vers une trémie vibrante sous atmosphère d'argon. Grâce aux vibrations les agglomérats sont fragmentés et les particules de silicium acheminées vers le conduit d'alimentation. L'injection de la poudre à l'intérieur du conduit est réalisée à l'aide d'un courant d'argon à titre de gaz vecteur. Son débit est fixé à 5 L.min⁻¹.

Dès le démarrage de l'injection le système de brassage par rotation, est mis en fonctionnement avec une vitesse de rotation d'environ 50 tr/min.

L'alimentation et le brassage par rotation sont réalisées en mode continu jusqu'à injection de la totalité de la poudre.

A la fin de l'injection, le bain de silicium liquide obtenu est purifié soit par solidification dirigée soit sous vide pour évaporer les impuretés volatiles présentes dans le métal. Dans ce dernier cas, le liquide est versé dans une lingotière.

## Revendications

1. Procédé pour alimenter un bain de silicium liquide en particules de silicium solides, comprenant l'injection desdites particules dans ledit bain par l'extrémité inférieure d'un conduit, immergée dans ledit bain, et le brassage par rotation desdites particules solides dans un espace confiné dudit bain jusqu'à obtenir leur fusion.

2. Procédé selon la revendication précédente dans lequel l'injection des particules solides dans ledit bain et leur brassage sont réalisés en continu.

3. Procédé selon l'une quelconque des revendications précédentes dans lequel le brassage est réalisé à l'aide d'au moins une pâle de brassage entraînée par rotation et disposée sur l'extrémité inférieure immergée dudit conduit.

4. Procédé selon la revendication précédente dans lequel l'espace confiné est délimité par une cloche disposée sur l'extrémité inférieure immergée dudit conduit et au-dessus et autour de ladite pâle de brassage.

5. Procédé selon l'une quelconque des revendications précédentes comprenant au moins les étapes consistant à :
a) Disposer d'un bain de silicium liquide dans lequel est immergée l'extrémité inférieure d'un conduit, ladite extrémité étant dotée d'au moins une pâle de brassage entraînée par rotation et d'une cloche disposée au-dessus et autour de ladite pâle de brassage,
b) Alimenter l'extrémité supérieure dudit conduit en particules solides de silicium dans des conditions propices à leur circulation dans ledit conduit et leur injection via son extrémité inférieure dans ledit bain liquide et,
c) Brasser par rotation lesdites particules solides dans le volume de bain liquide ménagé sous la cloche jusqu'à fusion desdites particules solides.

6. Procédé selon la revendication précédente dans lequel les étapes b) et c) sont réalisées simultanément.

7. Procédé selon l'une quelconque des revendications précédentes dans lequel l'injection desdites particules de silicium est réalisée à l'aide d'une trémie vibrante en extrémité supérieure dudit conduit.

8. Procédé selon l'une quelconque des revendications précédentes dans lequel la circulation des particules dans ledit conduit et leur injection dans ledit bain sont réalisées sous pression à l'aide d'un gaz vecteur inerte.

9. Procédé selon l'un quelconque des revendications précédentes dans lequel les particules solides de silicium sont de taille submicronique et de préférence variant de 0,2 à 50 µm et de préférence de 0,5 à 20 µm.

10. Procédé selon l'un quelconque des revendications précédentes dans lequel les particules de silicium solides possèdent un taux d'oxygène entre 5 % en poids à 30 % en poids par rapport à leur poids total.

11. Procédé selon l'un quelconque des revendications précédentes dans lequel les particules de silicium solides sont un sous-produit d'un procédé de fabrication de silicium de qualité électronique.

12. Dispositif pour alimenter un bain de silicium liquide en poudre de silicium comportant :
- un conduit (11) d'axe longitudinal X, adapté pour faire circuler une poudre de silicium, dont l'extrémité inférieure (12) est destinée à déboucher dans ledit bain,
- au moins une pâle de brassage (14) destinée à être immergée dans ledit bain, la pâle étant destinée à être entraînée en rotation par ledit conduit tournant autour de son axe,
- une cloche (16) qui s'étend au-dessus de la pâle de brassage et autour de celle-ci de façon à créer un espace confiné dans ledit bain.

13. Dispositif selon la revendication précédente dans lequel la cloche (16) est munie d'une cheminée (20) qui peut être utilisée pour acheminer les gaz, et en particulier le monoxyde de silicium, jusqu'en dehors du bain de silicium liquide.
